# EUROPEAN PATENT APPLICATION

(11) **EP 4 644 154 A1**
(43) Date of publication of application: **05.11.2025**
(21) Application number: 24795600.6
(22) Date of filing: 05.03.2024
(51) Int. Cl.: B60K 11/02

(54) **VEHICLE COOLING SYSTEM AND VEHICLE**

(30) Priority: 28.04.2023 CN 202310493329
(71) Applicant: Zhejiang Geely Holding Group Co., Ltd., Hangzhou, Zhejiang 310051 (CN); Zhejiang Liankong Technologies Co., Ltd., Ningbo, Zhejiang 315336 (CN)
(72) Inventor: XIAO, Bo, Hangzhou, Zhejiang 310051 (CN); DUN, Bi, Hangzhou, Zhejiang 310051 (CN)
(74) Representative: Range, Christopher William
(86) International application number: PCT/CN2024/080146
(87) International publication number: WO 2024/222213

(57) **Abstract**

Provided are a vehicle cooling system and a vehicle. The vehicle cooling system includes a battery cooling loop (10), a motor cooling loop (20), and a valve (50). A coolant reservoir (40) is connected in series in the battery cooling loop (10), and the coolant reservoir (40) is adapted to supply a coolant to the battery cooling loop (10) and participate in coolant circulation in the battery cooling loop (10) when the battery cooling loop (10) cools a battery (12). The motor cooling loop (20) has a coolant filling port and a fluid outlet. The coolant filling port is adapted to be connected to a first fluid outlet port of the coolant reservoir (40). The fluid outlet is adapted to be connected to a first fluid return port of the coolant reservoir (40). The coolant reservoir (40) supplies the coolant to the motor cooling loop (20) when the valve (50) is in an open state. The motor cooling loop (20) performs coolant self-circulation to cool a motor (22) when the valve (50) is in a closed state.

## Description

### CROSS-REFERENCE TO RELATED APPLICATION

This application claims priority to Chinese Patent Application No. 202310493329.5, filed on April 28, 2023 and titled "VEHICLE COOLING SYSTEM AND VEHICLE", the entire contents of which are incorporated herein by reference.

### FIELD

The present disclosure relates to the technical field of thermal management, and in particular, to a vehicle cooling system and a vehicle.

### BACKGROUND

During operation of a battery cooling loop and a motor cooling loop of an electric vehicle, due to there is a temperature difference between a coolant in the battery cooling loop and a coolant in the motor cooling loop, the battery cooling loop and the motor cooling loop currently generally adopt independent circulation designs.

There are two common manners for coolant filling and air exhausting. A first manner is that a coolant reservoir is provided in each of the battery cooling loop and the motor cooling loop for independent coolant filling and air exhausting. This manner requires two coolant reservoirs, leading to high costs. A second manner is that a coolant reservoir is provided in the motor cooling loop or the battery cooling loop, and one or more four-way valves are used to switch operation modes, allowing the battery loop and the motor loop to be connected in series for coolant filling and air exhausting. However, a control logic of the four-way valve is relatively complex, resulting in a relatively high failure rate of the four-way valve. Once the four-way valve malfunctions, both the battery cooling loop and the motor cooling loop may face risks of failure.

### SUMMARY

The present disclosure aims to at least solve one of the technical problems in the related art to some extent. To this end, a first objective of the present disclosure is to provide a vehicle cooling system. A coolant reservoir is connected in series in a battery cooling loop. A coolant filling port of a motor cooling loop is connected to a first fluid outlet port of the coolant reservoir, and a fluid outlet of the motor cooling loop is connected to a first fluid return port of the coolant reservoir through a valve. A coolant is supplied to the motor cooling loop based on an open/closed state of the valve. The valve has a simple control logic and a relatively low failure rate. Therefore, the vehicle cooling system has relatively high reliability.

A second objective of the present disclosure is to provide a vehicle.

To achieve the above objectives, according to an embodiment of a first aspect of the present disclosure, a vehicle cooling system is provided. The vehicle cooling system includes a battery cooling loop, a motor cooling loop and a valve. A coolant reservoir is connected in series in the battery cooling loop. The coolant reservoir is adapted to supply a coolant to the battery cooling loop and participate in coolant circulation in the battery cooling loop when the battery cooling loop cools a battery. The motor cooling loop has a coolant filling port and a fluid outlet, The coolant filling port is adapted to be connected to a first fluid outlet port of the coolant reservoir, and the fluid outlet is adapted to be connected to a first fluid return port of the coolant reservoir. The valve is disposed on a pipeline between the fluid outlet and the first fluid return port. The coolant reservoir supplies the coolant to the motor cooling loop when the valve is in an open state, and the motor cooling loop performs coolant self-circulation to cool a motor when the valve is in a closed state.

In the vehicle cooling system according to the embodiment of the present disclosure, the coolant reservoir is connected in series in the battery cooling loop. The coolant reservoir is adapted to supply the coolant to the battery cooling loop and participate in the coolant circulation in the battery cooling loop when the battery cooling loop cools the battery. Therefore, the battery cooling loop can perform normal coolant filling and air exhausting. The coolant filling port of the motor cooling loop is connected to the coolant reservoir. The fluid outlet of the motor cooling loop is connected to the first fluid return port of the coolant reservoir through the valve. The coolant reservoir supplies the coolant to the motor cooling loop when the valve is in the open state. The motor cooling loop performs the coolant self-circulation to cool the motor when the valve is in the closed state. Therefore, the valve has only two states, i.e., the open state and the closed state. Compared with a series state and a parallel state of the four-way valve, the valve has a simple control logic, a relatively low failure rate, and higher reliability. Therefore, the vehicle cooling system has the relatively high reliability. Moreover, the valve is more cost-effective than the four-way valve, resulting in a lower cost of the vehicle cooling system.

According to an embodiment of the present disclosure, the battery cooling loop includes a first pumping device and the battery. A water inlet of the first pumping device is connected to a second fluid outlet port of the coolant reservoir, a water outlet of the first pumping device is connected to an end of the battery, and another end of the battery is connected to a second fluid return port of the coolant reservoir.

According to an embodiment of the present disclosure, the motor cooling loop includes a second pumping device, the motor, and a radiator. A water inlet of the second pumping device is connected to the first fluid outlet port, a water outlet of the second pumping device is connected to an end of the motor, another end of the motor is connected to a water inlet of the radiator, and a water outlet of the radiator is connected to the valve and the water inlet of the second pumping device.

According to an embodiment of the present disclosure, when the valve is in the open state, the coolant circulates in a first loop and a second loop simultaneously. The first loop is a loop composed of the second pumping device, the motor, and the radiator, and the second loop is a loop composed of the coolant reservoir, the second pumping device, the motor, the radiator, and the valve.

According to an embodiment of the present disclosure, when the valve is in the closed state, the coolant circulates in a loop composed of the second pumping device, the motor, and the radiator.

According to an embodiment of the present disclosure, the coolant reservoir is disposed at a highest point of the vehicle cooling system.

According to an embodiment of the present disclosure, when the valve is in the closed state, the coolant reservoir further supplies the coolant to the motor cooling loop.

According to an embodiment of the present disclosure, the coolant reservoir supplies the coolant to the motor cooling loop at a first rate when the valve is in the closed state and at a second rate when the valve is in the open state, the first rate is lower than the second rate.

According to an embodiment of the present disclosure, the valve is a safety valve.

To achieve the above objectives, according to an embodiment of a second aspect of the present disclosure, a vehicle is provided. The vehicle includes the vehicle cooling system according to any one of the above embodiments.

In the vehicle according to the embodiments of the present disclosure, by adopting the aforementioned vehicle cooling system, the coolant reservoir is connected in series in the battery cooling loop, the coolant filling port of the motor cooling loop is connected to the first fluid outlet port of the coolant reservoir, and the fluid outlet of the motor cooling loop is connected to the first fluid return port of the coolant reservoir through the valve. The coolant is supplied to the motor cooling loop according to the open/closed state of the valve. The valve has a simple control logic and a relatively low failure rate. Therefore, the vehicle cooling system has relatively high reliability.

Additional aspects and advantages of the present disclosure are given in part in the following description, or become apparent in part from the following description, or can be learned from practicing of the present disclosure.

### BRIEF DESCRIPTION OF THE DRAWINGS

FIG. 1 is a system schematic diagram of a vehicle cooling system in the related art.
FIG. 2 is a system schematic diagram of a vehicle cooling system according to an embodiment of the present disclosure.
FIG. 3 is a schematic diagram showing a flow direction of a coolant when a valve is open according to an embodiment of the present disclosure.
FIG. 4 is a schematic diagram showing a flow direction of a coolant when a valve is closed according to an embodiment of the present disclosure.
FIG. 5 is a system schematic diagram of a vehicle according to an embodiment of the present disclosure.

### DETAILED DESCRIPTION

Embodiments of the present disclosure are described in detail below with reference to examples thereof as illustrated in the accompanying drawings, throughout which same or similar elements, or elements having same or similar functions, are denoted by same or similar reference numerals. The embodiments described below with reference to the accompanying drawings are illustrative only, and are intended to explain, rather than limiting, the present disclosure.

It should be noted that the present disclosure is made based on the inventor's recognition and research on the following problems.

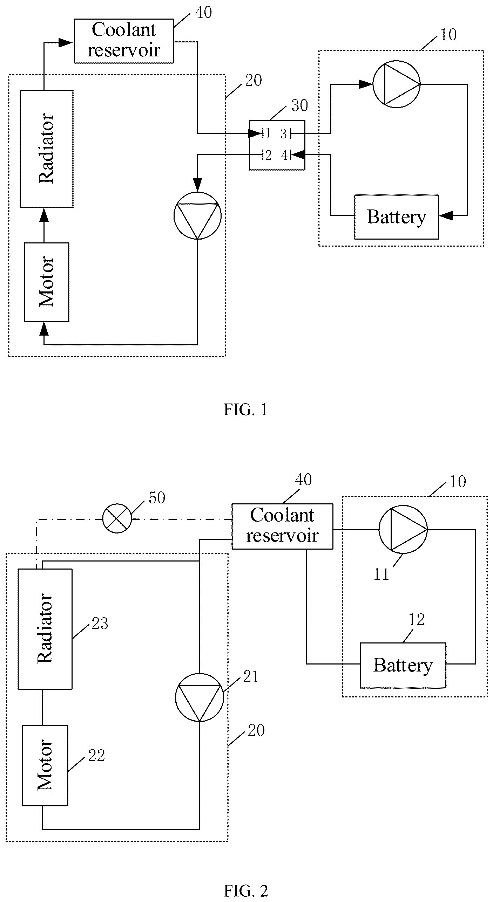

In the related art, as shown in FIG. 1, a vehicle cooling system includes a battery cooling loop 10, a motor cooling loop 20, and a four-way valve 30. A coolant reservoir 40 is connected in series in the motor cooling loop 20. The battery cooling loop 10 and the motor cooling loop 20 are connected through the four-way valve 30.

When the vehicle cooling system requires coolant filling and air exhausting, a first port 1 and a third port 2 of the four-way valve 30 are connected, and a second port 2 and a fourth port 4 of the four-way valve 30 are connected, so that a series loop is formed by the motor cooling loop 20 and the battery cooling loop 10, and the coolant reservoir 40 performs the coolant filling and air exhausting.

When the coolant filling and air exhausting of the vehicle cooling system are completed, and the vehicle cooling system is in a normal operation mode, the first port 1 and the second port 2 of the four-way valve 30 are connected, and the third port 3 and the fourth port 4 of the four-way valve 30 are connected, so that the motor cooling loop 20 and the battery cooling loop 10 operate independently.

In the related art, the coolant filling and air exhausting of the battery cooling loop can only be achieved by adjusting a connection manner of the four-way valve to a series connection manner. Since the four-way valve is often in parallel operation, the coolant reservoir is arranged in the motor cooling loop, allowing the motor cooling loop to perform normal coolant filling and air exhausting. However, when the battery cooling loop is short of coolant or requires air exhausting, the four-way valve must be adjusted to the series connection manner for coolant filling and air exhausting. If the four-way valve malfunctions, coolant filling and air exhausting functions of the battery cooling loop are at risks of failure. In addition, when an internal leakage index of the four-way valve is not up to standard, coolant circulation between the motor cooling loop and the battery cooling loop is affected, thereby affecting heat dissipation performance of the motor cooling loop and the battery cooling loop.

Based on this, the embodiments of the present disclosure provide a vehicle cooling system and a vehicle. The coolant reservoir is connected in series in the battery cooling loop. A coolant filling port of the motor cooling loop is connected to a first fluid outlet port of the coolant reservoir. A fluid outlet of the motor cooling loop is connected to a first fluid return port of the coolant reservoir through the valve. The coolant is supplied to the motor cooling loop according to an open/closed state of the valve. The valve has a simple control logic and a relatively low failure rate. Therefore, the vehicle cooling system has relatively high reliability.

A vehicle cooling system and a vehicle according to the embodiments of the present disclosure are described below with reference to the drawings.

FIG. 2 is a system schematic diagram of a vehicle cooling system according to an embodiment of the present disclosure. As shown in FIG. 2, the vehicle cooling system includes a battery cooling loop 10, a motor cooling loop 20, and a valve 50.

The coolant reservoir 40 is connected in series in the battery cooling loop 10. The coolant reservoir 40 is adapted to supply a coolant to the battery cooling loop 10 and participate in coolant circulation in the battery cooling loop 10 when the battery cooling loop 10 cools a battery 12. The motor cooling loop 20 has a coolant filling port and a fluid outlet. The coolant filling port is adapted to be connected to a first fluid outlet port of the coolant reservoir 40, and the fluid outlet is adapted to be connected to a first fluid return port of the coolant reservoir 40. The valve 50 is disposed on a pipeline between the fluid outlet and the first fluid return port. The coolant reservoir 40 supplies the coolant to the motor cooling loop 20 when the valve 50 is in an open state, and the motor cooling loop 20 performs coolant self-circulation to cool a motor 22 when the valve 50 is in a closed state.

In some embodiments, the coolant reservoir 40 is connected in series in the battery cooling loop 10. The coolant reservoir 40 is adapted to supply the coolant to the battery cooling loop 10 and participate in the coolant circulation in the battery cooling loop 10 when the battery cooling loop 10 cools the battery 12. Therefore, the coolant reservoir 40 can perform the coolant filling and air exhausting on the battery cooling loop 10 at any time. The coolant filling port of the motor cooling loop 20 is connected to the coolant reservoir 40, and the fluid outlet of the motor cooling loop 20 is connected to the first fluid return port of the coolant reservoir 40 through the valve 50. When the valve 50 is in the open state, the coolant reservoir 40 supplies the coolant to the motor cooling loop 20 through the coolant filling port. The coolant flows out from the fluid outlet, flows through the valve 50, and then flows into the first fluid return port. When the valve 50 is in the closed state, the fluid outlet is not connected to the first fluid return port, and the motor cooling loop 20 performs the coolant self-circulation to cool the motor 22. Therefore, the valve 50 has only the open state and the closed state, with a relatively simple control logic.

In some embodiments, the valve 50 is a safety valve.

It can be understood that the safety valve has a low failure rate and high reliability. Therefore, the reliability of the vehicle cooling system is also higher.

It should be noted that the valve 50 is not limited to the safety valve and may be other types of valves, which are not specifically limited herein.

In the above embodiments, since the coolant reservoir is connected in series in the battery cooling loop, the battery cooling loop can perform normal coolant filling and air exhausting. The coolant filling port of the motor cooling loop is connected to the first fluid outlet port of the coolant reservoir, and the fluid outlet of the motor cooling loop is connected to the first fluid return port of the coolant reservoir through the valve. The coolant is supplied to the motor cooling loop according to the open/closed state of the valve. The valve has a simple control logic, a low failure rate, and high reliability. Therefore, the vehicle cooling system has high reliability. Moreover, the valve has a relatively low cost, which can further save the cost of the vehicle cooling system. In addition, since there is no four-way valve between the battery cooling loop and the motor cooling loop, the vehicle cooling system is simpler in layout and requires less space.

In some embodiments, as shown in FIG. 2, the battery cooling loop 10 includes a first pumping device 11 and the battery 12. A water inlet of the first pumping device 11 is connected to a second fluid outlet port of the coolant reservoir 40, a water outlet of the first pumping device 11 is connected to an end of the battery 12, and another end of the battery 12 is connected to a second fluid return port of the coolant reservoir 40.

In some embodiments, as shown in FIG. 2, the first pumping device 11, the coolant reservoir 40, and the battery 12 are connected in series, and the coolant circulates in a loop composed of the first pumping device 11, the coolant reservoir 40, and the battery 12 connected in series to cool the battery 12.

In this embodiment, since the coolant reservoir is connected in series in the battery cooling loop, the battery cooling loop can perform the normal coolant filling and air exhausting. As long as the first pumping device is in operation, the coolant reservoir can perform the coolant filling and air exhausting on the battery cooling loop.

In some embodiments, as shown in FIG. 2, the motor cooling loop 20 includes a second pumping device 21, a motor 22, and a radiator 23. A water inlet of the second pumping device 21 is connected to the first fluid outlet port, a water outlet of the second pumping device 21 is connected to an end of the motor 22, another end of the motor 22 is connected to a water inlet of the radiator 23, and a water outlet of the radiator 23 is connected to the valve 50 and the water inlet of the second pumping device 21.

In some embodiments, the water inlet of the second pumping device 21 is connected to the first fluid outlet port of the coolant reservoir 40 via a fluid supply pipe, and the water outlet of the radiator 23 is connected to the valve 50 via an air exhaust pipe and to the water inlet of the second pumping device 21. When the valve 50 is open, a coolant flowing out from the water outlet of the radiator 23 may flow back to the coolant reservoir 40 through the valve 50, and the coolant reservoir 40 supplies the coolant to the water inlet of the second pumping device 21. When the valve 50 is closed, the coolant flowing out from the water outlet of the radiator 23 cannot flow back to the coolant reservoir 40 through the valve 50 and can only flow to the water inlet of the second pumping device 21.

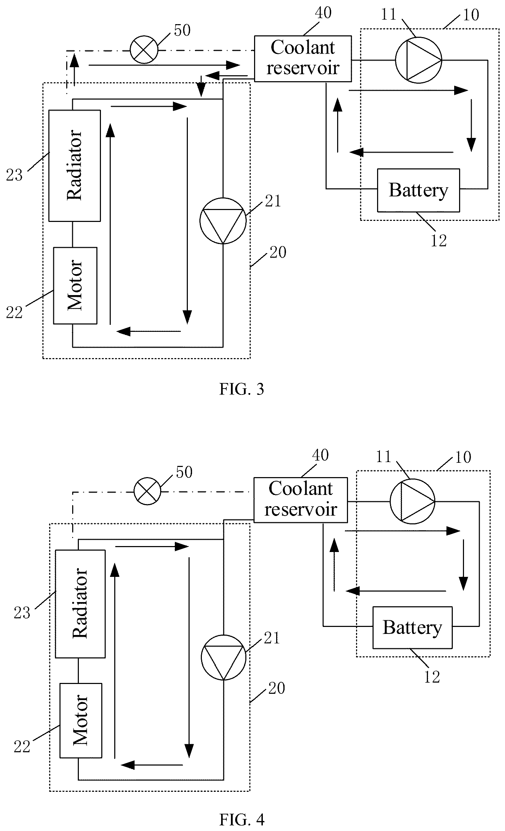

In some embodiments, as shown in FIG. 3, when the valve 50 is in the open state, the coolant circulates in a first loop and a second loop simultaneously. The first loop is a loop composed of the second pumping device 21, the motor 22, and the radiator 23, and the second loop is a loop composed of the coolant reservoir 40, the second pumping device 21, the motor 22, the radiator 23, and the valve 50.

In some embodiments, when the valve 50 is in the open state, the coolant flows out from the first fluid outlet port of the coolant reservoir 40 and then into the second pumping device 21. The second pumping device 21 pumps the coolant to the motor 22. After flowing out from the motor 22, the coolant flows into the radiator 23. Since the water outlet of the radiator 23 is connected to both the valve 50 and the second pumping device 21, the coolant flows to the valve 50 and the second pumping device 21. The coolant flows through the valve 50 and then into the coolant reservoir 40. Therefore, the first loop is composed of the second pumping device 21, the motor 22, and the radiator 23, and the second loop is composed of the coolant reservoir 40, the second pumping device 21, the motor 22, the radiator 23, and the valve 50.

In some embodiments, as shown in FIG. 4, when the valve 50 is in the closed state, the coolant circulates in a loop composed of the second pumping device 21, the motor 22, and the radiator 23.

In other words, no coolant flows from the motor cooling loop 20 into the coolant reservoir 40. There is no circulatory thermal interaction between the motor cooling loop 20 and the battery cooling loop 10 in the coolant reservoir 40. Therefore, the occurrence of a heat leakage situation can be avoided.

In some embodiments, as shown in FIG. 2, the coolant reservoir 40 is disposed at a highest point of the vehicle cooling system.

It can be understood that, the coolant reservoir 40 is disposed at the highest point of the vehicle cooling system, which can further save a space occupied by the vehicle cooling system.

In some embodiments, when the valve 50 is in the closed state, the coolant reservoir 40 further supplies the coolant to the motor cooling loop 20.

In some embodiments, since the coolant reservoir 40 is disposed at the highest point of the vehicle cooling system, when the valve 50 is closed, if the motor cooling loop 20 is short of coolant, a small amount of coolant can flow out from the coolant reservoir 40 and then into the motor cooling loop 20, to supply the coolant to the motor cooling loop 20, and air in the motor cooling loop 20 can flow into the coolant reservoir 40 in a reverse direction from the first fluid outlet port of the coolant reservoir 40, to perform the air exhausting.

In the above embodiments, when the coolant reservoir is disposed at the highest point of the vehicle cooling system, even if the valve is closed, the coolant flows out from the coolant reservoir to perform static high-position coolant supply on the motor cooling loop.

In some embodiments, the coolant reservoir 40 supplies the coolant to the motor cooling loop 20 at a first rate when the valve 50 is in the closed state and at a second rate when the valve 50 is in the open state, the first rate is lower than the second rate.

That is to say, when the valve 50 is open, the coolant flows in through the first fluid return port and then flows out through the first fluid outlet port to form a loop. As a result, a supply rate of the coolant is fast. When the valve 50 is closed, the coolant can only flow out through the first fluid outlet port, and no coolant flows in through the first fluid return port, so no loop is formed. As a result, the coolant has a relatively slow supply rate. Therefore, a manner for static high-position coolant supply can only be taken as an auxiliary coolant filling manner.

In summary, in the vehicle cooling system according to the embodiments of the present disclosure, the coolant reservoir is connected in series in the battery cooling loop, and the coolant reservoir is adapted to supply the coolant to the battery cooling loop and participate in the coolant circulation of the battery cooling loop when the battery cooling loop cools the battery, so the battery cooling loop can perform the normal coolant filling and air exhausting. The coolant filling port of the motor cooling loop is connected to the coolant reservoir, and the fluid outlet of the motor cooling loop is connected to the first fluid return port of the coolant reservoir through the valve. When the valve is in the open state, the coolant reservoir supplies the coolant to the motor cooling loop. When the valve is in the closed state, the motor cooling loop performs the coolant self-circulation to cool the motor. Therefore, the valve has only two states, i.e., the open state and the closed state. Compared with a series state and a parallel state of the four-way valve, the valve has the simple control logic, relatively low failure rate, and higher reliability. Therefore, the vehicle cooling system has the relatively high reliability. Moreover, the valve is more cost-effective than the four-way valve, resulting in a lower cost of the vehicle cooling system. In addition, since there is no four-way valve between the battery cooling loop and the motor cooling loop, the vehicle cooling system is simpler in layout and requires less space.

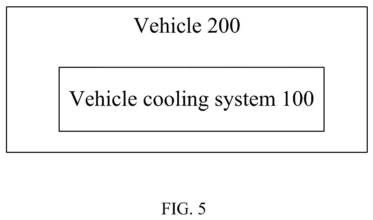

Corresponding to the above embodiments, the embodiments of the present disclosure further provide a vehicle. As shown in FIG. 5, the vehicle 200 includes the vehicle cooling system 100 according to any one of the foregoing embodiments.

In the vehicle according to the embodiments of the present disclosure, by adopting the aforementioned vehicle cooling system, the coolant reservoir is connected in series in the battery cooling loop, the coolant filling port of the motor cooling loop is connected to the first fluid outlet port of the coolant reservoir, and the fluid outlet of the motor cooling loop is connected to the first fluid return port of the coolant reservoir through the valve. The coolant is supplied to the motor cooling loop according to the open/closed state of the valve. The valve has the simple control logic and relatively low failure rate. Therefore, the vehicle cooling system has the relatively high reliability.

In the description of this specification, descriptions with reference to the terms "an embodiment", "some embodiments", "examples", "specific examples", or "some examples", etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

In the description of the present disclosure, it should be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumferential" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, the terms "first" and "second" used in the embodiments of the present disclosure are only used for descriptive purposes, and cannot be understood as indicating or implying relative importance or implicitly indicating the number of indicated technical features. Therefore, the features associated with "first" and "second" in the embodiments of the present disclosure may explicitly or implicitly include at least one of the features in the embodiments. In the description of the present disclosure, "a plurality of" means two or more, such as two, three, or four, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece. It can be understood that it may be a mechanical connection or an electrical connection. Of course, it may be a direct connection or an indirect connection through an intermediate; internal communication of two components or the interaction relationship between two components. For those of ordinary skill in the art, the specific meanings of the above terms in the present disclosure can be interpreted depending on specific situations.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although the embodiments of the present disclosure have been shown and described above, it can be understood that the above-mentioned embodiments are exemplary and should not be construed as limiting the present disclosure. For those of ordinary skill in the art, changes, modifications, substitutions, and variations can be made to the above-mentioned embodiments within the scope of the present disclosure.

## Claims

1. A vehicle cooling system, comprising:
a battery cooling loop, wherein a coolant reservoir is connected in series in the battery cooling loop, wherein the coolant reservoir is adapted to supply a coolant to the battery cooling loop and participate in coolant circulation in the battery cooling loop when the battery cooling loop cools a battery;
a motor cooling loop having a coolant filling port and a fluid outlet, wherein the coolant filling port is adapted to be connected to a first fluid outlet port of the coolant reservoir, and wherein the fluid outlet is adapted to be connected to a first fluid return port of the coolant reservoir; and
a valve disposed on a pipeline between the fluid outlet and the first fluid return port, wherein the coolant reservoir supplies the coolant to the motor cooling loop when the valve is in an open state, and wherein the motor cooling loop performs coolant self-circulation to cool a motor when the valve is in a closed state.

2. The vehicle cooling system according to claim 1, wherein the battery cooling loop comprises a first pumping device and the battery, wherein the first pumping device has a water inlet connected to a second fluid outlet port of the coolant reservoir and a water outlet connected to an end of the battery, another end of the battery being connected to a second fluid return port of the coolant reservoir.

3. The vehicle cooling system according to claim 1, wherein the motor cooling loop comprises a second pumping device, the motor, and a radiator, wherein the second pumping device has a water inlet connected to the first fluid outlet port and a water outlet connected to an end of the motor, another end of the motor being connected to a water inlet of the radiator, and a water outlet of the radiator being connected to the valve and the water inlet of the second pumping device.

4. The vehicle cooling system according to claim 3, wherein when the valve is in the open state, the coolant circulates in a first loop and a second loop simultaneously, wherein the first loop is a loop composed of the second pumping device, the motor, and the radiator, and wherein the second loop is a loop composed of the coolant reservoir, the second pumping device, the motor, the radiator, and the valve.

5. The vehicle cooling system according to claim 3, wherein when the valve is in the closed state, the coolant circulates in a loop composed of the second pumping device, the motor, and the radiator.

6. The vehicle cooling system according to any one of claims 1 to 5, wherein the coolant reservoir is disposed at a highest point of the vehicle cooling system.

7. The vehicle cooling system according to claim 6, wherein when the valve is in the closed state, the coolant reservoir further supplies the coolant to the motor cooling loop.

8. The vehicle cooling system according to claim 7, wherein the coolant reservoir supplies the coolant to the motor cooling loop at a first rate when the valve is in the closed state and at a second rate when the valve is in the open state, the first rate being lower than the second rate.

9. The vehicle cooling system according to claim 1, wherein the valve is a safety valve.

10. A vehicle, comprising the vehicle cooling system according to any one of claims 1 to 9.
